# EUROPÄISCHE PATENTSCHRIFT

(11) **EP 2 353 359 B1**
(45) Veröffentlichungstag und Bekanntmachung des Hinweises auf die Patenterteilung: **26.04.2017**
(21) Anmeldenummer: 11153060.6
(22) Anmeldetag: 02.02.2011
(51) Int. Cl.: A01C 15/00

(54) **Landwirtschaftliche Vorrichtung**
Agricultural device
Dispositif agricole

(30) Priorität: 04.02.2010 DE 102010000297
(43) Veröffentlichungstag der Anmeldung: 10.08.2011
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Holthaus, Stefan, 49509 Recke (DE)

(56) Entgegenhaltungen:
- DE-A1- 4 419 504
- DE-A1-102005 034 282
- DE-T3- 69 701 887
- DE-U1-202008 013 948

## Beschreibung

Die Erfindung betrifft eine landwirtschaftliche Vorrichtung gemäß des Oberbegriffes des Patentanspruches 1.

Eine derartige landwirtschaftliche Vorrichtung ist beispielsweise durch die DE 697 01 887 T3 bekannt. Diese landwirtschaftliche Vorrichtung ist als Zentrifugaldüngerstreuer zum Ausbringen von körnigen Materialien ausgebildet. Dieser Zentrifugalstreuer weist einen Rahmen auf, an dem ein Vorratsbehälter mit zwei Auslauftrichtern befestigt ist. Der obere Bereich des Auslauftrichters mündet in zwei Auslauftrichtern aus, die jeweils durch Dosiervorrichtungen nach unten abgeschlossen sind. Diese Dosiervorrichtungen führen das sich im Vorratsbehälterbehälter und den Auslauftrichtern befindliche Material in einstellbaren Mengen den unterhalb der Dosiervorrichtungen angeordneten und rotierend angetriebenen Schleuderscheiben zu. Der Vorratsbehälter mit seinen beiden Auslauftrichtern besteht aus Vorder- Rück- und Seitenwänden, sowie Wänden des dachförmigen Mittelteils. Die Wände des Vorratsbehälter und der Auslauftrichter sind als unabhängige Wände ausgebildet und miteinander zu einem Vorratsbehälter mit Auslauftrichter durch Schraubverbindungen verbunden. Hierdurch ergibt sich eine zeitaufwendige Montageweise des Vorratsbehälters mit den Auslauftrichtern.

Des weiteren sind in der Praxis landwirtschaftliche Vorrichtungen bekannt geworden, bei denen die Vorratsbehälter in zumindest zwei Auslauftrichtern ausmünden, die ebenfalls aus einzelnen Wänden bestehen. Diese unabhängigen Wände sind mittels Schweißverbindungen zu einem Vorratsbehälter mit zwei Auslauftrichtern zusammengefügt sind. Auch diese Ausgestaltung ist fertigungstechnisch zeitaufwendig. Darüber hinaus neigen die Schweißnähte, mittels denen die einzelnen Wände zusammengefügt sind, zur Rostbildung in dem rauen landwirtschaftlichen Einsatzbetrieb, wobei teilweise aggressive und den Rost fördernden Materialien ausgebracht werden.

Der Erfindung liegt die Aufgabe zugrunde, die Fertigung von Vorratsbehältern, der in zwei Auslauftrichter ausmündet, wesentlich zeitlich zu verbessern, wobei rostbildende Stellen an dem Vorratsbehälter und Auslauftrichter minimiert werden sollen.

Diese Aufgabe wird erfindungsgemäß dadurch gelöst, dass der Vorratsbehälter mit seinen Auslauftrichtern einteilig aus einer Stahlblechplatte in seiner Behälterform durch Tiefziehvorgänge als ein einziges Tiefziehteil ausgebildet ist. Infolge dieser Maßnahmen wird in geschlossener Herstellungsweise ein in zwei Auslauftrichtern ausmündender Vorratsbehälter geschaffen, der als ein einziges Bauteil ohne Verbindungsstellen und Nähten hergestellt und ausgestaltet ist. Weiterhin lässt sich ein derartiges Teil mit entsprechenden Rundungen und Neigungen ausgestalten, so dass ein vorteilhaftes Nachrutschen des sich im Vorratsbehälter und den Auslauftrichtern befindlichen Materiales zu den Dosiereinrichtungen ohne nennenswerte Staubildung im Vergleich den Ausgestaltungen von Vorratsbehältern nach dem Stand der Technik besteht.

Die vorteilhafte Ausgestaltung des Vorratsbehälters mit zwei Auslauftrichtern zur Schaffung der voneinander getrennten Auslauftrichtern, die mit Dosiervorrichtung abgeschlossen werden, lässt sich dadurch erreichen, dass die Auslauftrichter durch einen durch die Tiefziehvorgänge ausgebildeten dachförmigen Bereich getrennt sind.

Um die Voraussetzung für eine vorteilhafte Anordnung eines Sieb- und Sicherheitselementes im Vorratsbehälter zu schaffen, ist vorgesehen, dass in den Wandungen jedes Auslauftrichters ein stufenförmiger, vorzugsweise umlaufender Absatz eingeprägt und/oder eingeformt ist. Hierdurch lässt sich in einfacher Weise ein Siebelement in dem Bereich des stufenförmigen Absatzes einsetzen.

Eine vorteilhafte Anordnung und Befestigung des Siebelementes, welches gleichzeitig als Sicherheitselement dient, lässt sich dadurch erreichen, dass im Bereich des stufenförmigen Absatz ein Siebelement mittels Halterungs- und/oder Auflageelementen angeordnet ist.

Um eine ausreichende Tragfähigkeit des Vorratsbehälters sicherzustellen, ist vorgesehen, dass oberhalb des durch den Tiefziehvorgang ausgebildeten dachförmigen Bereiches ein mit diesem verbundenes Aussteifungselement angeordnet ist.

Um in vorteilhafter Weise ein ausreichend großes Fassungsvermögen entsprechend der jeweiligen Einsatzbedingungen, auch im Rahmen eines Baukastensystem zu gewährleisten, ist vorgesehen, dass an dem oberen umlaufenden Bereich des Vorratsbehälter sich zumindest ein anschließendes Aufsatzelement angeordnet ist. Hierdurch kann das Fassungsvermögen des Vorratsbehälters in einfacher Weise den jeweils gegebenen Einsatzbedingungen angepasst werden.

Aus der DE 4419504 A1 ist ein Ausgabetrichter für einen Transport- oder Lagercontainer mit Übergang von eckig auf rund bekannt. Ein entsprechender Ausgabetrichter wird durch Tiefziehen und anschließendes Triefdrücken nahtlos und kantenlos aus Blech, insbesondere Edelstahlblech, hergestellt.

Eine einfache Anordnung von Rührelementen oberhalb der Dosiervorrichtung lässt sich dadurch gewährleisten, dass an den unteren Bereich der Auslauftrichter Befestigungselemente für die Anordnung der Dosiervorrichtungen, vorzugsweise mit einer Schweißverbindung angeordnet sind.

Um in vorteilhafter Weise eine große Langlebigkeit des Vorratsbehälters zu erreichen ist vorgesehen, dass der Vorratsbehälter aus einem zumindest annähernd rostfreien oder rostträgem Material hergestellt ist.

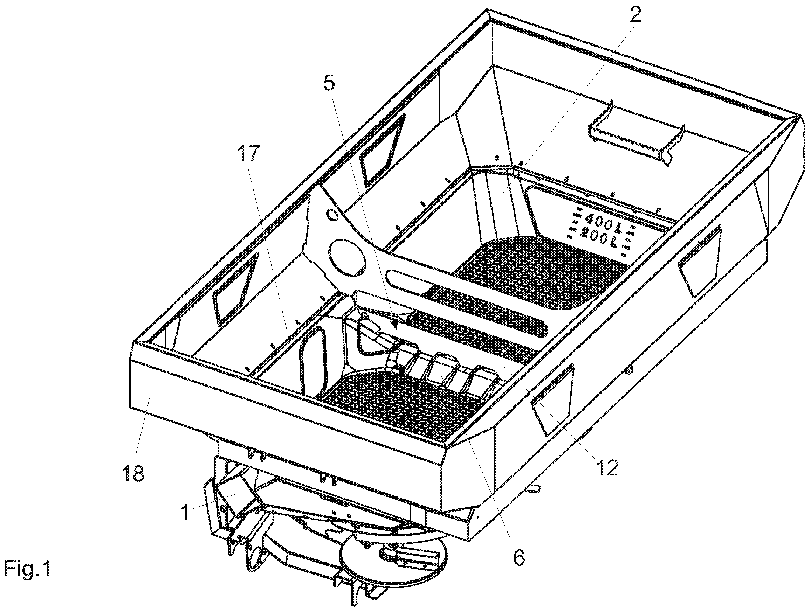

Weitere Einzelheiten der Erfindung sind der Beispielsbeschreibung und den Zeichnungen zu entnehmen. Hierbei zeigen
- Fig. 1: eine erfindungsgemäße landwirtschaftliche Vorrichtung, die als Zentrifugalstreuer ausgebildet ist, in perspektivischer Darstellung,

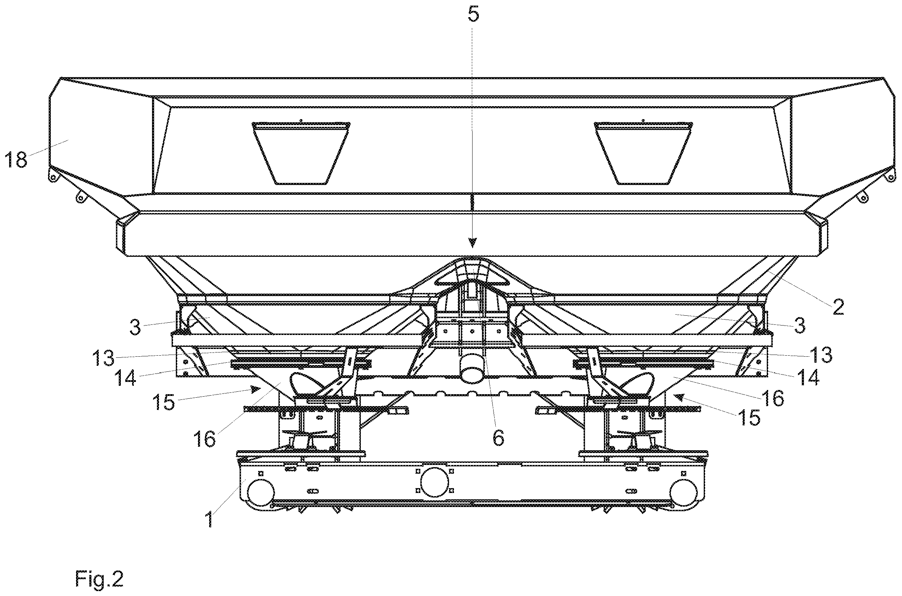

- Fig. 2: die erfindungsgemäße Vorrichtung in der Ansicht von hinten,

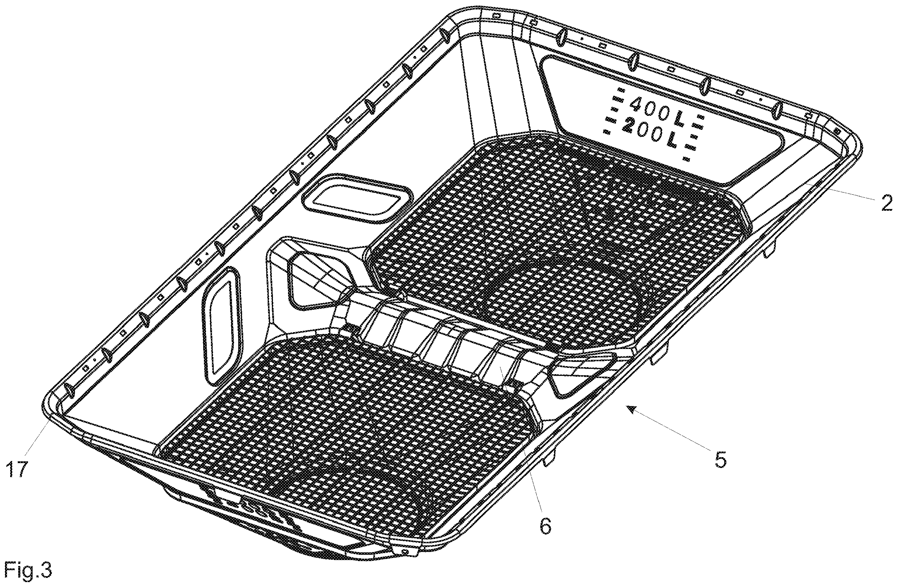

- Fig. 3: einen erfindungsgemäßen Vorratsbehälter des Zentrifugalstreuers mit den darin angeordneten Siebelementen in perspektivischer Darstellung,

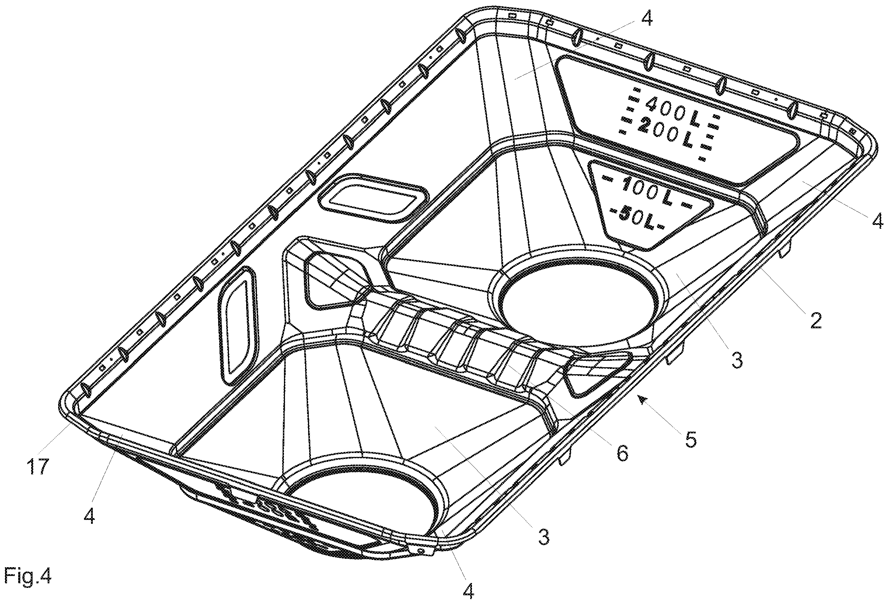

- Fig. 4: den erfindungsgemäßen Vorratsbehälter der Vorrichtung in perspektivischer Darstellung,

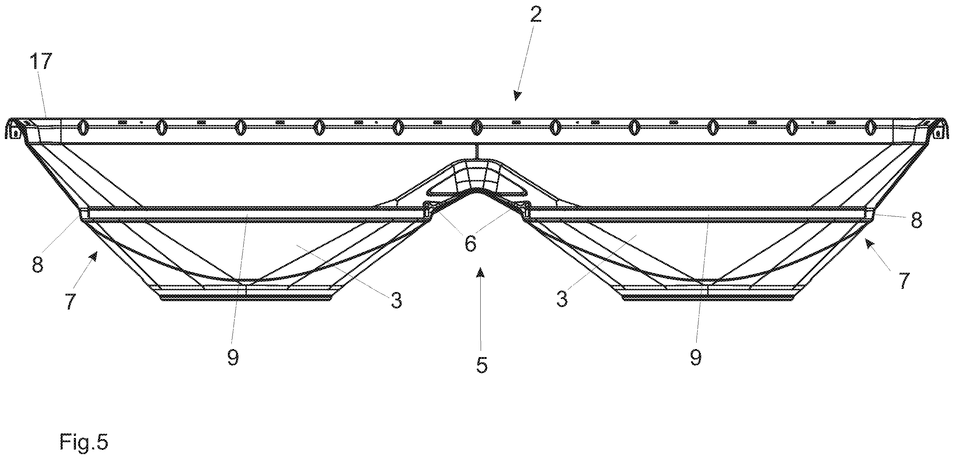

- Fig. 5: den erfindungsgemäßen Vorratsbehälter der Vorrichtung im Längsschnitt und

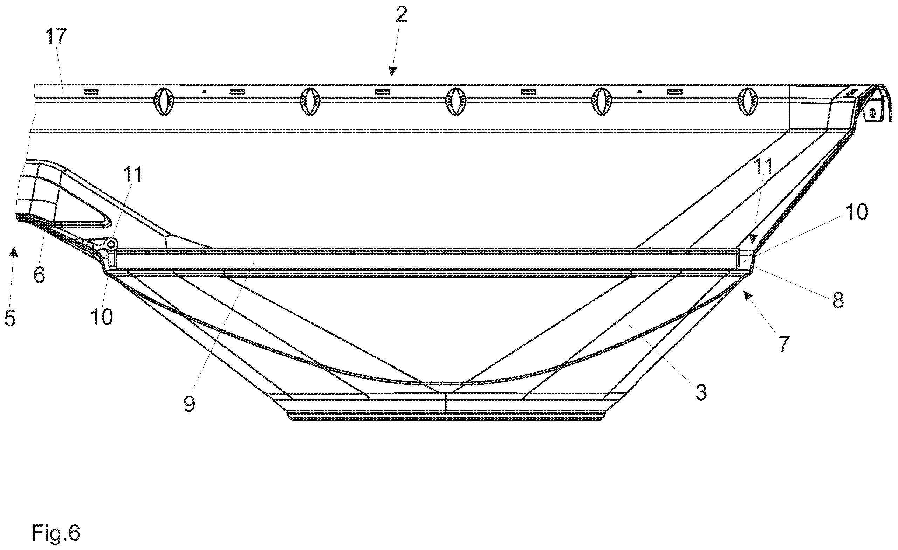

- Fig. 6: die rechte Hälfte des erfindungsgemäßen Vorratsbehälter der Vorrichtung im Längsschnitt gemäß Fig. 5 in vergrößertem Maßstab.

Die als Verteilmaschine ausgebildete landwirtschaftliche Vorrichtung zum Ausbringen von körnigen Materialien, wie beispielsweise Mineraldünger ist im Ausführungsbeispiel als Zentrifugaldüngerstreuer ausgestaltet. Der Zentrifugalstreuer weist einen von Rahmenelementen 1 getragenen Vorratsbehälter 2 auf, der in zwei Auslauftrichter 3 ausmündet. Der Rahmen 1 ist auf seiner Vorderseite in bekannter daher nicht dargestellter Weise mit Dreipunktkupplungselementen zum Anbau an einen Dreipunktkraftheber eines Ackerschleppers ausgestattet. Der Vorratsbehälter 2 mit seinen Auslauftrichtern 3 ist einteilig aus einer Stahlplatte in seine Behälterform durch ein oder mehrere Tiefziehvorgänge als ein einziges Tiefziehteil ausgebildet. Hierdurch ergibt sich die Möglichkeit einen Vorratsbehälter 2 mit unmittelbar angeformten Auslauftrichtern 3 ohne zusätzliche Montagegänge, wie Arbeitsvorgänge zum Erstellen von Schweißverbindungen oder Schraubverbindungen zu erstellen. Hierdurch werden in erster Linie Angriffsflächen für Rostvorgänge vermieden. Weiterhin besteht durch die Ausgestaltung des Vorratsbehälters 2 als Tiefziehteil die Möglichkeit, die Behältereckbereiche 4 besonders günstig für das Nachrutschen von dem in dem Vorratsbehälter 2 sich befindlichen Materialien auszubilden.

Im mittleren Bereich 5 des Vorratsbehälters 2, der durch die Tiefziehvorgänge hergestellt ist, befindet sich ein die Auslauftrichter 3 trennendes Dachelement 6, welches durch einen durch die Tiefziehvorgänge ausgebildeten dachförmigen Bereich gebildet wird.

In den Wandungen 7 der Auslauftrichter 3 des Vorratsbehälters 2 ist ein stufenförmiger, umlaufender Absatz 8 eingeprägt bzw. eingeformt. Dieser Bereich 8 dient zur Aufnahme eines im Vorratsbehälter 2 bzw. im oberen Bereich des jeweiligen Auslauftrichters 3 angeordneten Siebelementes 9. Diese Siebelemente 9 sind im Bereich des jeweiligen stufenförmigen Absatzes 8 mittels Halterungs- oder Auflageelementen 10 angeordnet, und zwar derart, dass die Siebelemente 9 beabstandet zu den Wänden 7 des Vorratsbehälters 2 bzw. der Auslauftrichter angeordnet sind. Hierdurch ergibt sich ein Spalt 11 zwischen den Wänden 7 der Auslauftrichter 3 und dem jeweiligen Siebelement 9, so dass hier Material durchrutschen kann, damit sich keine Stauungen im Bereich der Wandungen des Vorratsbehälters 2 und Auslauftrichter 3 oberhalb der Siebelemente 9 bilden können.

Oberhalb des durch den Tiefziehvorgang ausgebildeten dachförmigen Bereiches 6 ist ein mit dem oberen Bereich des dachförmigen Elementes 6 verbundenes Aussteifungselement 12 angeordnet und mit diesem Bereich verbunden, um eine Vergrößerung der Tragfähigkeit und Stabilität des Vorratsbehälters 2 zu erreichen.

An den unteren Enden 13 der Auslauftrichter 3 sind Befestigungselemente 14 für die Anordnung der die Auslauftrichter 3 nach unten abschließenden Dosiervorrichtungen 15 angeordnet. Diese Befestigungselemente 14 sind mittels Schraub- oder Schweißverbindungen an den unteren Bereichen 13 der Auslauftrichter 3 angeordnet. Die Dosiervorrichtungen 15 weisen jeweils einen trichterförmigen Auslauftopf 16 auf, der mit den Dosiereinrichtungen, die aus einer Öffnung in dem Bodenbereich des Auslauftopfes 16 mit zugeordnetem Schieber, der die Öffnungsweite der Auslauföffnung einstellt oder verschließt, ausgestattet ist. In dem Auslauftopf 16 der Dosiervorrichtungen 15 sind Rührelemente angeordnet, welche an den Wänden der Dosiervorrichtung des Auslauftopfes 16 gelagert sind.
An dem oberen Rand 17 des Vorratsbehälters 2, der mit den Rahmenelementen 1 verbunden ist, ist ein sich an den oberen umlaufenden Bereich des Vorratbehälters 2 anschließendes Aufsatzelement 18 zur Vergrößerung des Fassungsvermögens des Vorratsbehälters 2 angeordnet. Es können auch mehrere Aufsatzelemente 18 zur Vergrößerung des Fassungsvermögens aufeinander angeordnet werden.
Der Vorratsbehälter 2 ist aus einem zumindest annähernd rostfreien oder rostträgem Material hergestellt, um so eine möglichst lange Lebensdauer der Maschine zu erreichen.
Unterhalb der Dosiervorrichtungen 15 sind die rotierend angetriebenen und mit Wurfschaufeln besetzten Schleuderscheiben angeordnet, mit denen das sich im Vorratsbehälter befindliche Material zur Breitverteilung auf der zu bestreuenden Bodenoberfläche verteilt wird.

## Patentansprüche

1. Landwirtschaftliche Vorrichtung zum Ausbringen von körnigen Materialien mit einem von Rahmenelementen (1) getragenen in zumindest zwei Auslauftrichter (3) ausmündenden Vorratsbehälter (2), wobei die Auslauftrichter (3) jeweils von Dosiervorrichtungen (15) abgeschlossen sind, **dadurch gekennzeichnet, dass** der Vorratsbehälter (2) mit seinen Auslauftrichtern (3) einteilig aus einer Stahlblechplatte in seiner Behälterform durch Tiefziehvorgänge als ein einziges Tiefziehteil ausgebildet ist.

2. Vorrichtung nach Anspruch 1, **dadurch gekennzeichnet, dass** die Auslauftrichter (3) durch einen durch die Tiefvorgänge ausgebildeten dachförmigen Bereich (6) getrennt sind.

3. Vorrichtung nach zumindest einem der vorstehenden Ansprüche, **dadurch gekennzeichnet, dass** in den Wandungen (7) jedes Auslauftrichters (3) ein stufenförmiger, vorzugsweise umlaufender Absatz (8) eingeprägt und/oder eingeformt ist.

4. Vorrichtung nach Anspruch 3, **dadurch gekennzeichnet, dass** im Bereich des stufenförmigen Absatzes (8) ein Siebelement (9) mittels Halterungs- und/oder Auflageelementen (10), vorzugsweise beabstandet zu den Wänden (7) des Vorratsbehälters (2) angeordnet ist.

5. Vorrichtung nach Anspruch 2, **dadurch gekennzeichnet, dass** oberhalb des durch den Tiefziehvorgang ausgebildeten dachförmigen Bereiches (6) ein mit diesem verbundenes Aussteifungselement (12) angeordnet ist.

6. Vorrichtung nach zumindest einem der vorstehenden Ansprüche, **dadurch gekennzeichnet, dass** an dem oberen umlaufenden Bereich (17) des Vorratsbehälters (2) sich zumindest ein anschließendes Aufsatzelement (18) angeordnet ist.

7. Vorrichtung nach zumindest einem der vorstehenden Ansprüche, **dadurch gekennzeichnet, dass** an den jeweiligen unteren Bereichen (13) der Auslauftrichter (3) einen trichterförmigen Bereich aufweisende Dosiervorrichtungen (15) mit an den Wänden der Dosiervorrichtungen (15) gelagerten Rührelementen angeordnet sind.

8. Vorrichtung nach zumindest einem der vorstehenden Ansprüche, **dadurch gekennzeichnet, dass** der Vorratsbehälter (2) aus einem zumindest annähernd rostfreien oder rostträgem Material hergestellt ist.

9. Vorrichtung nach Anspruch 7, **dadurch gekennzeichnet, dass** an den unteren Bereich (13) der Auslauftrichter (3) Befestigungselemente (14) für die Anordnung der Dosiervorrichtungen (15), vorzugsweise mit einer Schweißverbindung angeordnet sind.

## Claims

1. Agricultural device for discharging granular materials, comprising a storage container (2) which is carried by frame elements (1) and leads into at least two discharge hoppers (3), wherein the discharge hoppers (3) are in each case closed off by metering devices (15), **characterized in that** the storage container (2) is formed integrally with its discharge hoppers (3) in its container shape from a sheet steel plate by deep-drawing processes as a single deep-drawn part.

2. Device according to Claim 1, **characterized in that** the discharge hoppers (3) are separated by a roof-shaped region (6) formed by the deep-drawing processes.

3. Device according to at least either of the preceding claims, **characterized in that** a step-shaped, preferably peripheral shoulder (8) is stamped and/or formed into the walls (7) of each discharge hopper (3).

4. Device according to Claim 3, **characterized in that** a sieve element (9) is arranged by means of holding and/or support elements (10), preferably at a distance from the walls (7) of the storage container (2), in the region of the step-shaped shoulder (8).

5. Device according to Claim 2, **characterized in that** a stiffening element (12) is arranged above the roof-shaped region (6) formed by the deep-drawing process and is connected thereto.

6. Device according to at least one of the preceding claims, **characterized in that** at least one adjoining attachment element (18) is arranged on the upper peripheral region (17) of the storage container (2).

7. Device according to at least one of the preceding claims, **characterized in that** metering devices (15) having a hopper-shaped region and with stirring elements mounted on the walls of the metering devices (15) are arranged at the respective lower regions (13) of the discharge hoppers (3).

8. Device according to at least one of the preceding claims, **characterized in that** the storage container (2) is produced from an at least approximately rust-free or rust-resistant material.

9. Device according to Claim 7, **characterized in that** fastening elements (14) for the arrangement of the metering devices (15) are arranged on the lower region (13) of the discharge hoppers (3), preferably with a welded joint.

## Revendications

1. Dispositif agricole pour épandre des matériaux granuleux, comprenant un réservoir (2) porté par des éléments de cadre (1) et débouchant dans au moins deux trémies de sortie (3), les trémies de sortie (3) étant à chaque fois fermées par des dispositifs de dosage (15), **caractérisé en ce que** le réservoir (2) est réalisé d'une seule pièce avec ses trémies de sortie (3) à partir d'une plaque en tôle d'acier dans sa forme de récipient par des opérations d'emboutissage profond sous forme de pièce emboutie profond unique.

2. Dispositif selon la revendication 1, **caractérisé en ce que** les trémies de sortie (3) sont séparées par une région (6) en forme de toit réalisée par les opérations d'emboutissage.

3. Dispositif selon au moins l'une quelconque des revendications précédentes, **caractérisé en ce qu'**un épaulement en forme d'étage (8), de préférence périphérique, est imprimé et/ou formé dans les parois (7) de chaque trémie de sortie (3).

4. Dispositif selon la revendication 3, **caractérisé en ce qu'**un élément de tamis (9) est disposé dans la région de l'épaulement en forme d'étage (8) au moyen d'éléments de fixation et/ou d'appui (10), de préférence à distance des parois (7) du réservoir (2).

5. Dispositif selon la revendication 2, **caractérisé en ce qu'**au-dessus de la région (6) en forme de toit réalisée par l'opération d'emboutissage profond est disposé un élément de rigidification (12) connecté à celle-ci.

6. Dispositif selon au moins l'une quelconque des revendications précédentes, **caractérisé en ce qu'**au niveau de la région supérieure périphérique (17) du réservoir (2) est disposé au moins un élément de coin (18) s'y raccordant.

7. Dispositif selon au moins l'une quelconque des revendications précédentes, **caractérisé en ce qu'**au niveau des régions inférieures respectives (13) de la trémie de sortie (3) sont disposés des dispositifs de dosage (15) présentant une région en forme de trémie, avec des éléments agitateurs supportés sur les parois des dispositifs de dosage (15).

8. Dispositif selon au moins l'une quelconque des revendications précédentes, **caractérisé en ce que** le réservoir (2) est fabriqué à partir d'un matériau au moins approximativement inoxydable ou résistant à la corrosion.

9. Dispositif selon la revendication 7, **caractérisé en ce que** des éléments de fixation (14) sont disposés au niveau de la région inférieure (13) des trémies de sortie (3), pour l'agencement des dispositifs de dosage (15), de préférence au moyen d'une connexion soudée.
